# FASCICULE DE BREVET EUROPEEN

(11) **EP 1 304 785 B1**
(45) Date de publication et mention de la délivrance du brevet: **27.08.2008**
(21) Numéro de dépôt: 02292560.6
(22) Date de dépôt: 16.10.2002
(51) Int. Cl.: H02H 7/04

(54) **Système de protection d'un transformateur de distribution polyphasé à isolation dans un diélectrique liquide, comportant au moins un interrupteur sectionneur de phase**
Schutzsystem für einen Mehrphasenverteiltransformator mit einer durch ein dielektrisches Fluidum unterstützten Isolierung, mit einem Unterbrecher-/Trennerschalter
Protection for a polyphase distribution transformer immersed in a dielectric fluid, comprising a interrupter-disconnect switch

(30) Priorité: 22.10.2001 FR 0113572
(43) Date de publication de la demande: 23.04.2003
(73) Titulaire: AREVA T&D SA, 92084 Paris La Defense Cedex (FR)
(72) Inventeur: Folliot, Philippe, 76350 Oissel (FR); Melquiond, Stéphane, 34400 Villetelle (FR); Hebert, Francois, 76520 Boos (FR); Grave, Patrice, 76133 Maneglise (FR)
(74) Mandataire: Audier, Philippe André

(56) Documents cités:
- EP-A- 1 102 379

## Description

L'invention porte sur un système de protection d'un transformateur de distribution à isolation dans un diélectrique liquide.

Dans les transformateurs de distribution à diélectrique liquide, en cas de défaut, il y a un risque d'échauffement du diélectrique provoquant une surpression pouvant atteindre une valeur telle qu'il explose. Il s'ensuit des risques de projection du diélectrique graves pour l'environnement.

La demande de brevet français FR2801141 décrit un système permettant d'éviter l'explosion du transformateur. Dans ce système de protection d'un transformateur de distribution triphasé immergé dans un diélectrique liquide contenu dans une cuve, deux des trois phases sont équipées chacune du côté haute tension du transformateur d'un fusible limiteur de courant et d'un micro-fusible de protection disposé en série avec le fusible limiteur de courant, chaque micro-fusible détectant des conditions anormales de courant et étant associé à un percuteur.

Ce système comporte, de plus, au moins un moyen de détection de défaut à partir d'au moins l'un des indicateurs que sont la pression dans la cuve et le niveau du diélectrique. Il comporte en outre un court-circuiteur situé sur la haute tension entre les fusibles limiteurs de courant et les enroulements haute tension du transformateur, ce court-circuiteur pouvant être commandé directement par le moyen de détection de défaut, ou bien par le percuteur par exemple associé à chaque micro-fusible en cas de fonctionnement du micro-fusible. La troisième phase est équipée du côté haute tension du transformateur et en amont du court-circuiteur d'un micro-sectionneur associé à un percuteur commandant le court-circuiteur en cas de fonctionnement du micro-sectionneur.

Le micro-sectionneur équivaut à un mico-fusible qui serait doté d'une fonction d'isolement, et a une lame conductrice calibrée pour déclencher la coupure des courants de défaut entre la troisième phase et la cuve du transformateur mise à la terre.

Toutefois, dans le cas d'un enchaînement de circonstances relativement exceptionnel, il est possible qu'il subsiste sur la troisième phase un courant de défaut résiduel à la terre qui soit supérieur au seuil de coupure du micro-sectionneur. Dans pareil cas, l'isolation du bobinage du transformateur n'est plus assurée.

Le but de l'invention est de perfectionner ce système de protection pour assurer l'isolation du bobinage dans tous les cas.
A cet effet, l'invention a pour objet un système de protection d'un transformateur de distribution comportant N phases, le transformateur étant immergé dans un diélectrique liquide contenu dans une cuve, dans lequel au moins N-1 phases sont chacune équipées du côté haute tension du transformateur d'un fusible limiteur de courant apte à couper en cas de court-circuit franc entre les phases, le système comportant :
- au moins un moyen de détection de défaut à partir d'au moins l'un des indicateurs que sont la pression dans la cuve, le niveau du diélectrique ou la température du transformateur,
- un court-circuiteur agissant sur toutes les phases, situé en amont des enroulements haute tension et pouvant être commandé par ledit moyen de détection de défaut pour établir un court-circuit franc entre les phases,
- sur au moins N-1 phases, un moyen de détection d'un courant anormal en amont du transformateur, associé à un moyen de commande du déclenchement dudit court-circuiteur,
caractérisé en ce que au moins la phase non équipée de fusible limiteur est équipée d'un interrupteur sectionneur normalement fermé en l'absence de défaut, disposé du côté haute tension du transformateur en amont du court-circuiteur, et dont l'ouverture est déclenchée par le court-circuiteur en cas de défaut avec un certain retard par rapport au déclenchement du court-circuiteur lui même.

L'ouverture d'un interrupteur sectionneur est déclenchée mécaniquement ou électriquement par le mouvement du court-circuiteur déclenché.

Après l'ouverture du ou des interrupteurs sectionneurs, tous les conducteurs et connexions des enroulements haute tension du transformateur sont isolés du réseau.

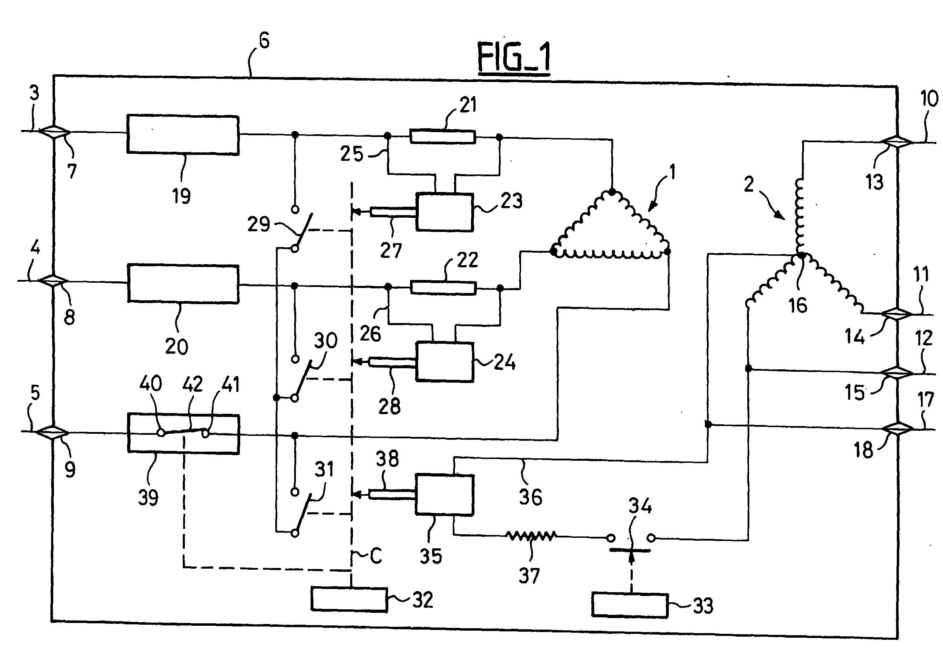

Selon un mode de réalisation particulier du système de protection selon l'invention, le système est triphasé et comprend deux fusibles limiteurs de courant. Au moins la phase non équipée de fusible limiteur est équipée d'un interrupteur sectionneur, lesdits fusibles équipant chacun une autre phase et l'ouverture de l'interrupteur sectionneur étant déclenchée par le court-circuiteur de façon à isoler la phase dudit sectionneur (39) seulement après la coupure desdits fusibles par le court-circuiteur. Dans l'exemple de réalisation décrit à la figure 1, seule la phase non équipée de fusible limiteur est équipée d'un interrupteur sectionneur.

Selon un autre mode de réalisation particulier du système de protection selon l'invention, le système comprend pour chaque phase un fusible limiteur de courant en série avec un interrupteur sectionneur, un moyen de détection d'un courant anormal étant installé sur au moins N-1 phase.

Selon un mode de réalisation particulier du système de protection selon l'invention, l'interrupteur sectionneur comporte deux bornes écartées l'une de l'autre et respectivement connectées à la troisième phase et au court-circuiteur. Les deux bornes de l'interrupteur sectionneur sont reliées entre elles par une tige coulissante électriquement conductrice qui est déplacée en translation ou en rotation sous l'action de la détente d'un ressort en séquence avec l'ouverture du court-circuiteur. L'interrupteur sectionneur comprend en outre une goupille amovible qui verrouille le déplacement de la tige et qui est reliée mécaniquement à une partie mobile du court-circuiteur pour être libérée quand le court-circuiteur fonctionne. L'interrupteur sectionneur peut aussi être déclenché par l'intermédiaire d'un système mécanique type percuteur lui-même actionné grâce à l'établissement d'un contact électrique actionné par le court-circuiteur. Par ailleurs, une première borne de l'interrupteur sectionneur est directement reliée à une phase de l'alimentation haute tension. Le sectionneur est agencé pour que cette première borne reste en contact électrique avec la tige pendant une partie du trajet en translation ou en rotation de la tige de façon à n'assurer l'isolation qu'après la coupure complète des fusibles limiteurs de courant sur les deux autres phases.

Selon encore un mode de réalisation particulier du système de protection selon l'invention, la tige est disposée à l'intérieur d'un boîtier muni d'évents. Le boîtier est normalement rempli du diélectrique et les évents permettent d'éviter une surpression interne lors de la dilatation du diélectrique dans les phases de fonctionnement normal du transformateur. Par ailleurs ces évents permettent l'évacuation des gaz qui pourraient se former lors du coulissement de la tige et aussi un remplissage sous vide du boîtier par le diélectrique contenu à l'intérieur de la cuve.

Selon encore un autre mode de réalisation, l'interrupeur sectionneur est réalisé sur la base d'un dispositif rotatif comportant un contact fixe et un contact mobile en rotation. Dans ce mode de réalisation, le contact mobile en rotation reste en contact électrique avec le contact fixe pendant une partie de la rotation pour que l'ouverture électrique soit réalisée avec un retard par rapport au début de rotation du contact mobile.

Des exemples de réalisation du système de protection selon l'invention sont décrits ci-après et illustrés sur les dessins.

La figure 1 montre très schématiquement un exemple de réalisation d'un système de protection selon l'invention.

La figure 2 illustre un premier exemple de réalisation d'un interrupteur sectionneur équipant le système de protection selon l'invention, l'interrupteur sectionneur occupant une position fermée.

La figure 3 illustre l'interrupteur sectionneur de la figure 2 quand il occupe une position d'ouverture complète.

La figure 4 montre un deuxième exemple de réalisation de l'interrupteur sectionneur équipant le système de protection selon l'invention.

La figure 5 est une représentation vue de profil du deuxième exemple de réalisation du sectionneur du système de protection selon l'invention.

Le transformateur illustré sur la figure 1 est par exemple un transformateur 20/0,410 kvolts. On a figuré en 1 l'enroulement haute tension en triangle et en 2 l'enroulement basse tension en étoile. L'enroulement haute tension 1 est alimenté par les trois phases 3,4 et 5 qui pénètrent de façon étanche dans la cuve du transformateur, schématiquement représentée par un rectangle 6, par des traversées isolantes 7,8 et 9.

L'enroulement basse tension 2 alimente les lignes de phases 10,11 et 12 en traversant de façon étanche la cuve 6 par des traversées isolantes 13,14 et 15 et de même, le point neutre 16 est relié à un conducteur neutre 17 traversant de façon étanche la cuve par une traversée isolante 18.

Côté haute tension, deux des trois phases, ici les phases repérées 3 et 4 sont reliées à l'enroulement haute tension 1 par l'intermédiaire d'un fusible limiteur de courant respectivement 19 et 20.

Ces fusibles fonctionnent normalement au-dessus d'une valeur d'intensité qu'on appellera intensité de coupure Ic, par exemple de 60 ampères. Au-dessous de cette valeur, il existe une zone d'intensité critique pour laquelle le fusible s'échauffe, se dégrade et a plus de difficultés à couper, par exemple entre 36 et 60 ampères. Afin de protéger ces fusibles contre un mauvais fonctionnement dans cette zone d'intensité critique, chaque fusible limiteur de courant 19,20 est associé en série à un micro-fusible, respectivement 21 et 22 plus rapide que le fusible limiteur de courant et constitué par une courte lame d'argent, par exemple des fusibles de type basse tension. Son rôle est d'obtenir une fusion pour des courants dans la zone d'intensité critique du fusible limiteur de courant avec une bonne précision, ou tout au moins d'offrir une résistance suffisamment élevée dans cette zone d'intensité critique pour que le courant soit dérivé sur un circuit parallèle. Chaque micro-fusible est associé à un percuteur respectivement 23 et 24 monté en parallèle.

Un tel percuteur est connu en soi ; il est constitué d'un doigt poussé par un ressort maintenu bandé par un fil d'acier. Le fil d'acier, figuré en 25 et 26, est branché en parallèle sur le micro-fusible 21,22. Le fil d'acier du percuteur a une résistance électrique beaucoup plus élevée que celle de la lame d'argent du micro-fusible, de telle sorte qu'en fonctionnement normal, le courant passe dans la lame d'argent évitant le vieillissement du fil d'acier. En cas de surintensité, dans la zone calibrée correspondant à la zone critique, la lame d'argent fond, d'où déviation du courant vers le fil d'acier qui fond lui aussi libérant le doigt 27, 28 du percuteur.

La libération du doigt d'un percuteur commande la fermeture d'un court-circuiteur triphasé 29,30,31. Cette commande C est assurée par l'intermédiaire d'un système mécanique de déclenchement quelconque et est figurée par le tracé en traits discontinus. Le système comporte en outre un détecteur de pression 32 qui commande également le court-circuiteur 29,30,31 en cas de pression du liquide diélectrique dépassant la valeur de réglage du capteur. Un système pour détecter le dépassement d'un seuil de température en un ou plusieurs points représentatifs du transformateur, ou encore un détecteur de niveau 33 du liquide diélectrique dans le transformateur, peuvent compléter également le dispositif de protection.

En cas de baisse de niveau du liquide diélectrique au-dessous d'un seuil de sécurité ou d'un dépassement d'un seuil de température, le détecteur 33 constitué par exemple par un simple flotteur, ou encore un capteur de température constitué par exemple par un simple bilame, effectue la fermeture d'un contact 34. Ce dernier ferme alors un circuit comprenant un percuteur 35 dont le fil d'acier 36 est branché en parallèle entre le point neutre 16 et une phase 12. Une résistance de limitation 37 est insérée dans le circuit si nécessaire. La fermeture du contact 34 fait circuler dans ce circuit un courant qui fait fondre le fil d'acier 36 du percuteur 35 libérant son doigt 38 et provoquant la fermeture du court-circuiteur 29, 30, 31.

Ainsi en cas d'apparition d'un défaut, tel qu'une surintensité, une surpression ou une fuite de la cuve entraînant une baisse de niveau du liquide diélectrique d'une valeur déterminée, on provoque un court-circuit franc entre les trois phases haute tension 3,4 et 5 en un point situé entre les fusibles 19,20 et l'enroulement haute tension 1, ce qui provoque immédiatement la coupure des fusibles 19 et 20. Les première et seconde phases 3 et 4 sont alors isolées de l'enroulement haute tension 1.

A la différence de la construction connue de la demande de brevet français FR2801141, la troisième phase 5 est équipée du côté haute tension du transformateur et en amont du court-circuiteur 29,30,31 d'un interrupteur sectionneur 39 qui est normalement fermé en l'absence de défaut et dont l'ouverture est déclenchée mécaniquement ou électriquement par le mouvement du court-circuiteur lorsqu'un défaut apparaît dans la cuve 6. Ainsi on obtient une déconnexion certaine de l'ensemble des enroulements 1 haute tension du transformateur en cas de défaut.

Dans le mode de réalisation représenté sur la figure 1, pour lequel une seule phase est équipée d'un interrupteur sectionneur, cet interrupteur sectionneur 39 est conçu pour s'ouvrir avec un certain retard à partir de l'instant où le court-circuiteur est déclenché, de façon à isoler cette phase seulement après la coupure des fusibles limiteurs de courant sur les autres phases.

L'invention n'est toutefois pas limitée à ce mode de réalisation, et il est possible d équiper chaque phase, du côté haute tension en amont du court-circuiteur, avec un interrupteur sectionneur lui même en série avec un fusible limiteur de courant situé en amont ou en aval de cet interrupteur sectionneur. Un moyen de détection d'un courant anormal en amont du transformateur, tel qu'un micro-fusible 21 ou 22, peut alors équiper chaque phase et être associé à un moyen de commande du court-circuiteur tel qu'un percuteur 23 ou 24. Dans un tel mode de réalisation non représenté, les interrupteurs sectionneurs s'ouvent simultanément à partir de l'instant où le court-circuiteur est déclenché. Cette disposition est particulièrement adaptée à des systèmes autres que triphasés, tels que biphasés, ou bien aux réseaux à neutre à la terre.

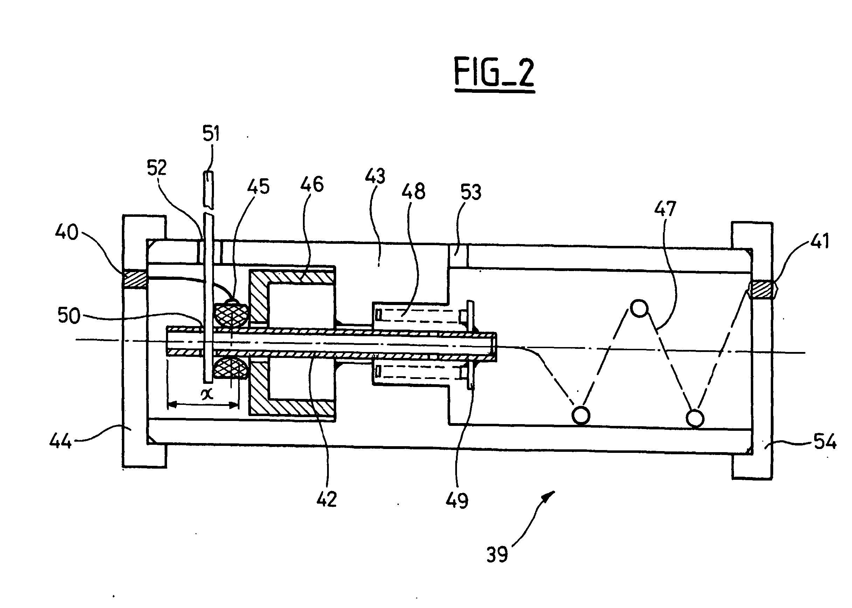

Un interrupteur sectionneur 39 comporte deux bornes 40,41 écartées l'une de l'autre et respectivement connectées à la troisième phase et au court-circuiteur. Ces deux bornes sont reliées entre elles par une tige coulissante 42 électriquement conductrice, montrée sur la figure 2, qui est déplacée en translation pour connecter ou séparer les bornes 40,41.

Figure 2, La tige coulissante 42 est disposée axialement dans un boîtier 43 en matière électriquement isolante, ici de forme cylindrique. Le boîtier est fermé à ses deux extrémités par deux couvercles traversés respectivement par les bornes 40, 41. La borne 40 est reliée électriquement à un contact électrique 45 glissant de forme annulaire qui est traversé par une extrémité de la tige 42 et qui est maintenu fixement dans le boîtier par une entretoise 46 électriquement isolante. Le contact 45 est disposé à proximité du couvercle 44. La borne 41 est reliée par un conducteur souple 47 à l'autre extrémité de la tige 42 la plus proche du couvercle 54. L'intérieur du boîtier 43 forme un alésage traversé par la tige 42 et dans lequel est disposé un ressort 48 ayant une extrémité en appui dans le fond de l'alésage et l'autre extrémité en appui contre une rondelle 49 fixée autour de la tige 42. Un amortisseur hydraulique est avantageusement disposé sur la partie initiale du mouvement de déplacement de la tige 42. L'extrémité de la tige 42 proche du couvercle 44 présente un évidement transversal 50 dans lequel pénètre une goupille 51 amovible. La goupille 51 s'étend radialement vers l'extérieur du boîtier 43 par une ouverture 52 du boîtier.

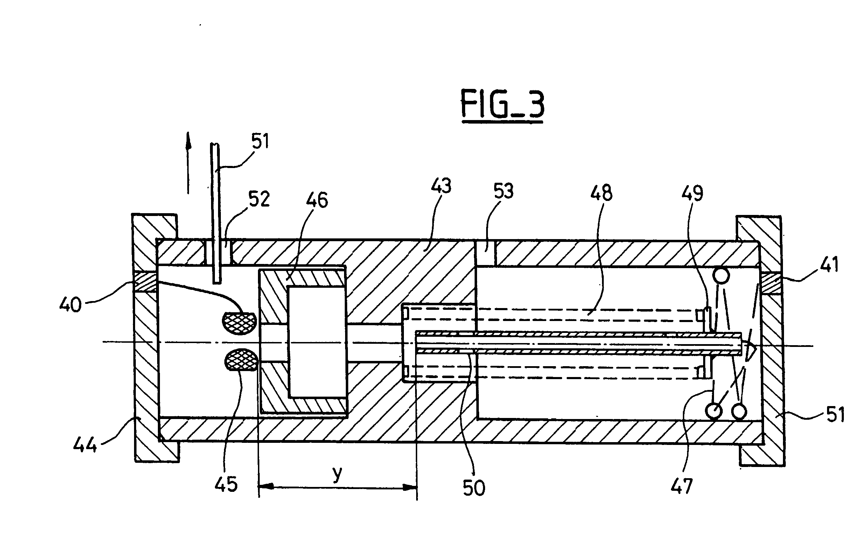

Quand l'interrupteur sectionneur occupe sa position fermée, le ressort 48 est bandé entre le fond de l'alésage et la rondelle 49, la tige 42 pénètre le contact 45 et la goupille 51 pénètre la tige 42 interdisant son déplacement axial dans le boîtier 43. La tige 42 relie électriquement les deux bornes 40 et 41 à travers le contact 45 et le conducteur 47. Quand la goupille 51 est libérée de la tige 42 par traction vers l'extérieur du boîtier 43 comme illustré par la flèche sur la figure 3, le ressort 48 se détend et entraîne en translation la tige 42 vers le couvercle 54 ce qui provoque la séparation du contact 45 et de la tige 42. A la fin de la course de la tige 42, les deux bornes 40 et 41 sont isolées électriquement d'une distance de sectionnement Y suffisante, comme représenté sur la figure 3.

Comme visible sur la figure 2, l'extrémité de la tige 42 la plus proche du couvercle 44, en position de fermeture de l'interrupteur sectionneur 39, pénètre le contact 45 sur une distance x suffisante telle que lorsque la goupille 51 est libérée de la tige 42, le temps pendant lequel la tige 42 se déplace sous l'action de la détente du ressort et ralenti par l'action de l'amortisseur hydraulique, tout en restant en contact électrique avec le contact 45 soit sensiblement supérieur au temps nécessaire à la coupure des fusibles limiteurs de courant 19, 20 compté à partir de l'instant où le court-circuiteur est déclenché.

La goupille 51 est par exemple reliée mécaniquement à une partie mobile du court-circuiteur qui est déplacée quand le court-circuiteur fonctionne.

Le boîtier 43 est normalement rempli du diélectrique contenu dans la cuve et présente des évents comme l'ouverture 52 ou l'ouverture 53 permettant son remplissage par le diélectrique ou l'évacuation de gaz en surpression. Quand l'interrupteur sectionneur est disposé dans la cuve remplie de diélectrique, il est préférable que les évents 52,53 soient disposés sur le dessus du boîtier 43 pour éviter une vidange du diélectrique hors du boîtier 43 en cas de fuite de la cuve 6.

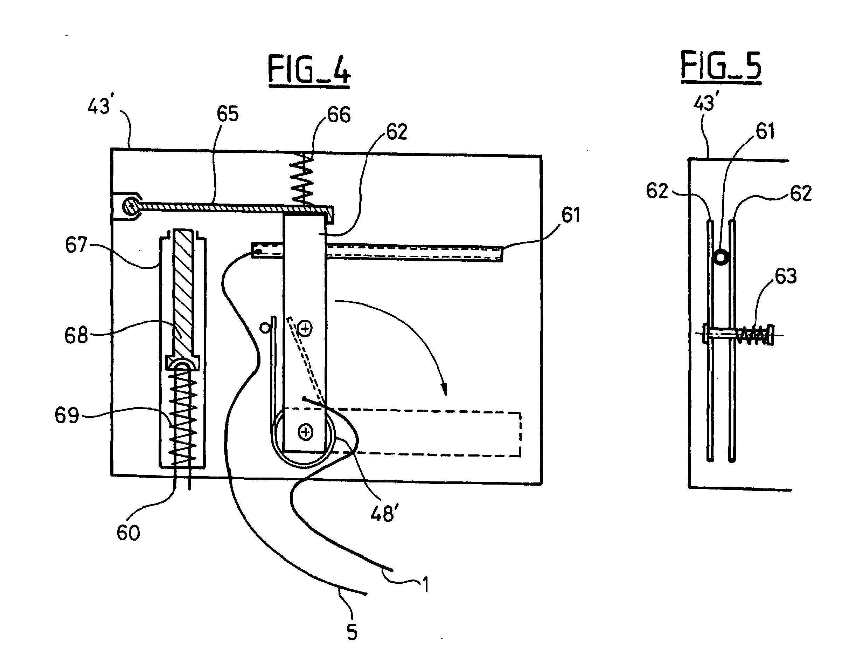

En variante, l'interrupteur sectionneur 39 pourra être réalisé sur la base d'un dispositif rotatif monté dans un boîtier 43' représenté figure 4. Ce dispositif comporte un contact fixe 61 connecté à la troisième phase 5 de l'alimentation haute tension et un contact mobile rotatif 62 connecté aux enroulements haute tension 1.

Dans l'exemple de réalisation donné figure 4, le contact fixe est un tube disposé entre deux plaquettes sensiblement parallèles formant le contact mobile. Les plaquettes sont montées rotatives sur un axe distant du tube et perpendiculaire au tube. Lors de l'ouverture de l'interrupteur sectionneur, le ressort 48' entraîne en rotation les plaquettes qui restent en contact électrique avec le tube pendant une partie du mouvement de rotation, ce qui a pour effet de retarder d'une certaine durée l'ouverture de l'interrupteur sectionneur. Comme visible figure 5, les deux plaquettes 62 sont maintenues en appui sur le tube conducteur par un ressort presseur 63 situé sensiblement à mi-longueur des plaquettes. Avec cet agencement, le retard d'ouverture pourra être ajusté en modifiant l'effort exercé par le ressort presseur 63 sur les plaquettes 62.

En position fermée de l'interrupteur sectionneur 39, l'extrémité libre des plaquettes 62 est retenue par un organe de verrouillage qui est ici une palette articulée 65 bloquant leur mouvement de rotation. Dans cet exemple de réalisation, la palette articulée 65 est verrouillée sur les plaquettes sous l'action d'un ressort de maintien 66 et elle est déverrouillée par un organe de déverrouillage qui est ici un percuteur agissant sur la palette à l'encontre du ressort 66. Quand le percuteur est actionné la palette articulée est déplacée ce qui libère les plaquettes 62 et entraîne l'ouverture de l'interrupteur sectionneur.

Ce percuteur pourra être actionné mécaniquement ou bien électriquement par le court-circuiteur 29, 30, 31. Dans l'exemple de la figure 4, le percuteur est actionné électriquement par le court-circuiteur. Comme expliqué plus haut, un tel percuteur comporte un doigt 68 coulissant dans un corps 67. Le doigt 68 est en appui sur un ressort de déclenchement 69 tout en étant retenu par un fil d'acier 60. Sur application d'un courant par le court-circuiteur le fil d'acier 60 fond ce qui libère le doigt 68. Le doigt 68 se déplace alors sous l'action du ressort 69 pour pousser la palette articulée.

## Revendications

1. Système de protection d'un transformateur de distribution comportant N phases, le transformateur étant immergé dans un diélectrique liquide contenu dans une cuve (6), dans lequel au moins N-1 phases (3,4) sont chacune équipées du côté haute tension du transformateur d'un fusible limiteur de courant (19,20) apte à couper en cas de court-circuit franc entre les phases, le système comportant :
- au moins un moyen (32,33) de détection de défaut à partir d'au moins l'un des indicateurs que sont la pression dans la cuve, le niveau du diélectrique ou la température du transformateur,
- un court-circuiteur (29,30,31) agissant sur toutes les phases (3,4,5), situé en amont des enroulements haute tension (1) et pouvant être commandé par ledit moyen de détection de défaut pour établir un court-circuit franc entre les phases,
- sur au moins N-1 phases (3,4), un moyen (21,22) de détection d'un courant anormal en amont du transformateur, associé à un moyen (23,24) de commande du déclenchement dudit court-circuiteur,
**caractérisé en ce que** au moins la phase non équipée de fusible limiteur est équipée d'un interrupteur sectionneur (39) normalement fermé en l'absence de défaut, disposé du côté haute tension du transformateur en amont du court-circuiteur, et dont l'ouverture est déclenchée par le court-circuiteur en cas de défaut avec un certain retard par rapport au déclenchement du court-circuiteur lui même.

2. Système de protection triphasé selon la revendication 1, comprenant deux fusibles limiteurs de courant (19,20) et dans lequel au moins la phase non équipée de fusible limiteur (5) est équipée d'un interrupteur sectionneur (39), lesdits fusibles équipant chacun une autre phase (3,4) et l'ouverture de l'interrupteur sectionneur étant déclenchée par le court-circuiteur de façon à isoler la phase dudit sectionneur (39) seulement après la coupure desdits fusibles (19,20) par le court-circuiteur.

3. Système de protection selon la revendication 1, comprenant pour chaque phase (3,4,5) un fusible limiteur de courant en série avec un interrupteur sectionneur, un moyen de détection d'un courant anormal étant installé sur au moins N-1 phase.

4. Système de protection selon l'une des revendications 1 à 3, dans lequel l'ouverture de l'interrupteur sectionneur (39) est déclenchée mécaniquement par un mouvement du court-circuiteur en cas de défaut.

5. Système de protection selon la revendication 4, dans lequel l'interrupteur sectionneur (39) comporte : une première borne (40) connectée à la troisième phase (5) de l'alimentation haute tension ainsi qu'une seconde borne (41) connectée aux enroulements haute tension (1) et au court-circuiteur, lesdites première et seconde bornes étant reliées entre-elles par une tige coulissante (42) électriquement conductrice qui est déplacée en translation sous l'action de la détente d'un ressort (48) quand l'ouverture du court-circuiteur est déclenchée, une goupille (51) amovible qui verrouille le déplacement de ladite tige et qui est reliée mécaniquement à une partie mobile du court-circuiteur pour être libérée quand le court-circuiteur fonctionne, la première borne (40) étant maintenue en contact électrique avec la tige pendant une partie (x) du trajet en translation de la tige.

6. Système de protection selon la revendication 5, dans lequel le maintien du contact électrique entre la première borne (40) et la tige coulissante (42) est assuré par un contact glissant (45) fixe électriquement relié à la première borne, de forme annulaire et traversé par une extrémité de la tige coulissante.

7. Système de protection selon l'une des revendications 5 et 6, dans lequel la tige (42) est disposée à l'intérieur d'un boîtier (43) muni d'évents (52,53), le boîtier étant normalement rempli du diélectrique.

8. Système de protection selon l'une des revendications 1 à 4, dans lequel l'interrupteur sectionneur (39) comporte:
- un contact fixe (61) connecté à la phase (5) que ledit sectionneur (39) équipe dans l'alimentation haute tension,
- un contact mobile en rotation (62) connecté aux enroulements haute tension (1),
- un ressort (64) agissant sur le contact mobile pour l'entraîner en rotation,
- un organe de blocage (65,66) qui bloque le mouvement de rotation du contact mobile (62),
- un organe de déverrouillage (60,69,68,67) qui est actionné par le court-circuiteur (29,30,31) pour agir sur l'organe de blocage (65, 66) de manière à libérer le contact mobile,
ledit contact mobile (62) étant mis en contact électrique avec ledit contact fixe (61) pendant une partie de son mouvement de rotation.

9. Système de protection selon la revendication 8, dans lequel l'organe de déverrouillage (60,69,68,67) est un percuteur (67) actionné électriquement par le court-circuiteur (29, 30, 31).

10. Système de protection selon l'une des revendications 8 et 9, dans lequel le contact fixe (61) est un tube, et dans lequel le contact mobile en rotation (62) est formé par deux plaquettes sensiblement parallèles, ledit tube étant disposé entre lesdites plaquettes.

11. Système de protection selon l'une des revendications 1 à 10, dans lequel chaque moyen (21,22) de détection d'un courant anormal consiste en un micro-fusible (21,22) de protection, chaque micro-fusible étant disposé en série avec un fusible limiteur de courant (19,20) et étant plus rapide que ledit fusible limiteur de courant.

12. Système de protection selon la revendication 11, dans lequel chaque micro-fusible (21,22) est associé à un percuteur (23,24) apte à commander ledit court-circuiteur (29,30) en cas de fonctionnement dudit micro-fusible.

## Claims

1. A protection system for protecting a distribution transformer having N phases, the transformer being immersed in a liquid dielectric contained in a tank (6), in which at least N-1 phases (3, 4) are equipped on the high-voltage side of the transformer with respective current-limiting fuses (19, 20) capable of blowing in the event of a dead short circuit between the phases, the system comprising:
- at least one fault detector (32, 33) for detecting faults on the basis of at least one of the following indicators: pressure in the tank, level of the dielectric, or temperature of the transformer;
- a short-circuiter (29, 30, 31) acting on all the phases (3, 4, 5) situated upstream from the high-voltage windings (1), said short-circuiter being capable of being triggered by said fault detector to establish a dead short circuit between the phases; and
- on at least N-1 phases (3, 4), a detector (21,22) for detecting an abnormal current upstream from the transformer, said detector being associated with control means (23, 24) for controlling the triggering of said short-circuiter,
said protection system being **characterized in that** at least the phase that is not equipped with a limiting fuse is equipped with a disconnector switch (39) which is normally closed in the absence of any fault, said disconnector switch being disposed on the high-voltage side of the transformer upstream from the short-circuiter, and opening thereof being triggered by the short-circuiter in the event of a fault, but with a certain delay relative to the triggering of the short-circuiter itself.

2. A three-phase protection system according to claim 1, comprising two current-limiting fuses (19, 20) and in which at least the phase (5) that is not equipped with a limiting fuse is equipped with a disconnector switch (39), each of said fuses equipping a respective other phase (3, 4), and opening of the disconnector switch being triggered by the short-circuiter so that the phase of said switch (39) is isolated only after said fuses (19, 20) have been blown by the short-circuiter.

3. A protection system according to claim 1, comprising, for each phase (3, 4, 5), a current-limiting fuse in series with a disconnector switch, with a detector for detecting an abnormal current being installed on each of at least N-1 phases.

4. A protection system according to any one of claims 1 to 3, in which opening of the disconnector switch (39) is triggered mechanically by movement of the short-circuiter in the event of a fault.

5. A protection system according to claim 4, in which the disconnector switch (39) includes: a first terminal (40) connected to the third phase (5) of the high-voltage power supply; and a second terminal (41) connected to the high-voltage windings (1) and to the short-circuiter; said first and second terminals being interconnected via an electrically-conductive slidably-mounted rod (42) that is moved in translation under the action of a spring (48) relaxing when opening of the short-circuiter is triggered; and a removable pin (51) which prevents said rod from moving, and which is connected mechanically to a moving portion of the short-circuiter so as to be released when the short-circuiter operates, the first terminal (40) being held in electrical contact with the rod during a portion (x) of the translation stroke of the rod.

6. A protection system according to claim 5, in which the electrical contact between the first terminal (40) and the slidably-mounted rod (42) is maintained by a fixed sliding contact (45) which is connected electrically to the first terminal, which is annular in shape, and through which an end of the slidably-mounted rod passes.

7. A protection system according to claim 5 or 6, in which the rod (42) is disposed inside a housing (43) provided with vents (52, 53), the housing normally being filled with the dielectric.

8. A protection system according to any one of claims 1 to 4, in which the disconnector switch (39) includes:
- a fixed contact (61) connected to the phase (5) that said switch (39) equips in the high-voltage power supply;
- a rotary moving contact (62) connected to the high-voltage windings (1);
- a spring (64) acting on the moving contact to rotate it;
- a looking member (65, 66) which prevents the moving contact (62) from rotating; and
- an unlocking member (60, 69, 68, 67) which is actuated by the short-circuiter (29, 30, 31) to act on the locking member (65, 66) to release the moving contact,
said moving contact (62) being put into electrical contact with said fixed contact (61) during a portion of its rotary stroke.

9. A protection system according to claim 8, in which the unlocking member (60, 69, 68, 67) is a striker (67) actuated electrically by the short-circuiter (29, 30, 31).

10. A protection system according to claim 8 or 9, in which the fixed contact (61) is a tube, and in which the rotary moving contact (62) is formed by two substantially parallel plates, said tube being disposed between said plates.

11. A protection system according to any one of claims 1 to 10, in which each detector (21, 22) for detecting an abnormal current consists of a protection micro-fuse (21, 22), each micro-fuse being disposed in series with a current-limiting fuse (19, 20) and being faster than said current-limiting fuse.

12. A protection system according to claim 11, in which each micro-fuse (21, 22) is associated with a striker (23, 24) capable of triggering said short-circuiter (29, 30) when said micro-fuse operates.

## Patentansprüche

1. Schutzsystem für einen Verteilertransformator mit N Phasen, wobei der Transformator in einem dielektrischen Fluidum versenkt ist, das in einem Behälter (6) enthalten ist, wobei zumindest N-1 Phasen (3, 4) auf der Hochspannungsseite des Transformators jeweils mit einer strombegrenzenden Sicherung (19, 20) ausgestattet sind, die bei einem satten Kurschluss zwischen den Phasen eine Unterbrechung bewirken kann, wobei das System enthält:
- zumindest ein Mittel (32, 33) zur Fehlererfassung ausgehend von zumindest einen der Parameter Behälterdruck, Niveau des Dielektrikums bzw. Temperatur des Transformators,
- eine Kurzschlussvorrichtung (29, 30, 31), die auf sämtliche Phasen (3, 4, 5) einwirkt, den Hochspannungswicklungen (1) vorgelagert ist und über das Fehlererfassungsmittel gesteuert werden kann, um einen satten Kurschluss zwischen den Phasen zu erzeugen,
- an zumindest N-1 Phasen (3, 4) ein Mittel (21, 22) zum Erfassen eines anormalen Stroms vor dem Transformator, das einem Mittel (23, 24) zum Steuern des Auslösens der Kurzschlussvorrichtung zugeordnet ist,
**dadurch gekennzeichnet, dass** zumindest die nicht mit der strombegrenzenden Sicherung ausgestattete Phase mit einem bei Fehlerfreiheit normalerweise geschlossenen Trennschalter (39) ausgestattet ist, der auf der Hochspannungsseite des Transformators angeordnet und der Kurzschlussvorrichtung vorgelagert ist und dessen Öffnen bei einem vorhandenen Fehler über die Kurzschlussvorrichtung mit einer bestimmten Verzögerung bezüglich des Auslösens der Kurzschlussvorrichtung selbst ausgelöst wird.

2. Dreiphasenschutzsystem nach Anspruch 1, mit zwei strombegrenzenden Sicherungen (19, 20), wobei zumindest eine Phase (5), die nicht mit einer strombegrenzenden Sicherung ausgestattet ist, mit einem Trennschalter (39) ausgestattet ist, wobei die Sicherungen jeweils zu einer anderen Phase (3, 4) gehören und das Öffnen des Trennschalters über die Kurzschlussvorrichtung so ausgelöst wird, dass die Phase des Trennschalters (39) erst nach Unterbrechen der Sicherungen (19, 20) durch die Kurzschlussvorrichtung getrennt wird.

3. Schutzsystem nach Anspruch 1, das für jede Phase (3, 4, 5) eine strombegrenzende Sicherung in Reihe mit einem Trennschalter enthält, wobei ein Mittel zum Erfassen eines anormalen Stroms an zumindest N-1 Phasen angeordnet ist.

4. Schutzsystem nach einem der Ansprüche 1 bis 3, wobei das Öffnen des Trennschalters (39) mechanisch durch eine Bewegung der Kurzschlussvorrichtung im Falle eines Fehlers ausgelöst wird.

5. Schutzsystem nach Anspruch 4, wobei der Trennschalter (39) enthält: eine erste Anschlussklemme (40), die mit der dritten Phase (5) der Hochspannungsversorgung verbunden ist, sowie eine zweite Anschlussklemme (41), die mit den Hochspannungswicklungen (1) und mit der Kurzschlussvorrichtung verbunden ist, wobei die erste und die zweite Anschlussklemme über eine elektrisch leitfähige Gleitstange (42) miteinander verbunden sind, die unter der Wirkung einer sich entspannenden Feder (48) translatorisch verschoben wird, wenn das Öffnen der Kurzschlussvorrichtung ausgelöst wird, einen abnehmbaren Stift (51), der die Verstellung der Stange blockiert und mechanisch mit einem beweglichen Teil der Kurzschlussvorrichtung verbunden ist, um freigegeben zu werden, wenn die Kurzschlussvorrichtung in Betrieb ist, wobei die erste Anschlussklemme (40) über einen Teil (x) des Verschiebewegs der Stange elektrisch in Kontakt mit der Stange gehalten wird.

6. Schutzsystem nach Anspruch 5, wobei das Aufrechthalten des elektrischen Kontakts zwischen der ersten Anschlussklemme (40) und der Gleitstange (42) über einen festen Gleitkontakt gewährleistet wird, der mit der ersten Anschlussklemme elektrisch verbunden ist, ringförmig ausgebildet ist und von einem Ende der Gleitstange durchsetzt wird.

7. Schutzsystem nach einem der Ansprüche 5 und 6, wobei die Stange (42) innerhalb eines Gehäuses (43) angeordnet ist, das mit Lüftungsöffnungen (52, 53) versehen ist, wobei das Gehäuse normalerweise mit dem Dielektrikum gefüllt ist.

8. Schutzsystem nach einem der Ansprüche 1 bis 4, wobei der Trennschalter (39) enthält:
- einen festen Kontakt (61), der an die Phase (5) angeschlossen ist, die mit dem Trennschalter (39) bei der Hochspannungsversorgung ausgestattet ist,
- einen drehbeweglichen Kontakt (62), der mit den Hochspannungswicklungen (1) verbunden ist,
- eine Feder (64), die auf den beweglichen Kontakt einwirkt, um ihn drehend mitzunehmen,
- ein Blockierglied (65, 66), das die Drehbewegung des beweglichen Kontakts (62) blockiert,
- ein Entriegelungsglied (60, 69, 68, 67), das über die Kurzschlussvorrichtung (29, 30, 31) betätigt wird, um auf das Blockierglied (65, 66) so einzuwirken, dass der bewegliche Kontakt freigegeben wird,
wobei der bewegliche Kontakt (62) über einen Teil seiner Drehbewegung elektrisch in Kontakt mit dem festen Kontakt (61) gebracht wird.

9. Schutzsystem nach Anspruch 8, wobei das Entriegelungsglied (60, 69, 68, 67) ein Schlagstift (67) ist, der über die Kurschlussvorrichtung (29, 30, 31) elektrisch betätigt wird.

10. Schutzsystem nach einem der Ansprüche 8 und 9, wobei der feste Kontakt (61) ein Rohr ist und der drehbewegliche Kontakt (62) aus zwei im wesentlichen parallel verlaufenden Platten gebildet ist, wobei das Rohr zwischen den Platten angeordnet ist.

11. Schutzsystem nach einem der Ansprüche 1 bis 10, wobei jedes Mittel (21, 22) zum Erfassen eines anormalen Stroms aus einer Mikroschutzsicherung (21, 22) besteht, wobei jede Mikrosicherung in Reihe mit einer strombegrenzenden Sicherung (19, 20) angeordnet und schneller als die strombegrenzende Sicherung ist.

12. Schutzsystem nach Anspruch 11, wobei jeder Mikrosicherung (21, 22) ein Schlagstift (23, 24) zugeordnet ist, der die Kurschlussvorrichtung (29, 30) bei Betrieb der Mikrosicherung steuern kann.
